# EUROPÄISCHE PATENTSCHRIFT

(11) **EP 3 544 810 B1**
(45) Veröffentlichungstag und Bekanntmachung des Hinweises auf die Patenterteilung: **21.10.2020**
(21) Anmeldenummer: 17798186.7
(22) Anmeldetag: 13.11.2017
(51) Int. Cl.: B32B 17/10, F27B 17/00

(54) **VERFAHREN ZUR LAMINATION EINER VERBUNDSCHEIBE**
METHOD FOR LAMINATION OF A LAMINATED GLAZING
PROCÉDÉ DE LAMINAGE D'UNE VITRE FEUILLETÉE

(30) Priorität: 22.11.2016 EP 16199945
(43) Veröffentlichungstag der Anmeldung: 02.10.2019
(73) Patentinhaber: SAINT-GOBAIN GLASS FRANCE, 92400 Courbevoie (FR)
(72) Erfinder: KLEIN, Marcel, 52499 Baesweiler (DE); GOERENZ, Walter, 52146 Würselen (DE); GIER, Stephan, 66359 Bous (DE); LÜCKE, Stefan, 52477 Alsdorf (DE)
(74) Vertreter: Obermair, Christian Egbert
(86) Internationale Anmeldenummer: PCT/EP2017/079005
(87) Internationale Veröffentlichungsnummer: WO 2018/095749

(56) Entgegenhaltungen:
- EP-A1- 1 967 805
- DE-A1- 2 321 979
- US-A- 4 175 162
- US-A1- 2007 034 317
- US-A1- 2009 126 859

## Beschreibung

Die Erfindung betrifft ein Verfahren zur Lamination einer Verbundscheibe und insbesondere ein autoklavfreies Verfahren sowie eine Vorrichtung zur Durchführung des erfindungsgemäßen Verfahrens.

Verbundscheiben finden vielfach Verwendung, beispielsweise als Fahrzeugscheiben wie Windschutzscheiben, Seitenscheiben, Heckscheiben oder Dachscheiben in Fahrzeugen zu Wasser, zu Lande oder in der Luft, aber auch als Architekturscheiben, als Brandschutzscheiben, als Sicherheitsverglasung oder in Möbeln sowie beweglichen oder festmontierten Einrichtungsgegenständen.

Verbundscheiben umfassen typischerweise zwei Scheiben, beispielsweise eine Substratscheibe und eine Deckscheibe, die über eine Zwischenschicht, beispielsweise aus einer thermoplastischen Polyvinylbutyral (PVB)-Folie in einem Laminationsverfahren unter Einwirkung von Hitze und Druck miteinander verbunden werden.

Industriell übliche Laminationsverfahren umfassen dabei in der Regel einen Entlüftungsprozess kombiniert mit einem Autoklavprozess, wie beispielsweise in DE 19903171 A1 offenbart ist. Autoklavprozesse sind in der Regel sehr zeitaufwendig und energieintensiv.

US 2009/0126859 A1, US 2007/0034317 A1 und EP 1 967 805 A1 offenbaren autoklavfreie Laminationsverfahren.

Autoklavfreie Laminationsverfahren haben oftmals den Nachteil, dass die Scheiben nur unzureichend miteinander verbunden werden und beispielsweise im Fahrzeugbereich üblichen Anforderungen nicht genügen. Des Weiteren zeigen autoklavfrei laminierte Verbundscheiben oftmals Lufteinschlüsse und Trübungen im Randbereich der Verbundscheibe.

Die Aufgabe der vorliegenden Erfindung besteht nunmehr darin, ein verbessertes Verfahren zur Lamination einer Verbundscheibe und insbesondere ein autoklavfreies Verfahren bereitzustellen, das es ermöglicht kostengünstig Verbundscheiben hoher Qualität herzustellen.

Die Aufgabe der vorliegenden Erfindung wird erfindungsgemäß durch ein Verfahren zur Lamination einer Verbundscheibe gemäß dem unabhängigen Anspruch 1 gelöst. Bevorzugte Ausführungsformen gehen aus den Unteransprüchen hervor.

Das erfindungsgemäße Verfahren umfasst zumindest die folgenden Verfahrensschritte: Einen ersten Schritt (a) Herstellen einer Stapelfolge aus einer Substratscheibe, mindestens einer Zwischenschicht und einer Deckscheibe, die durch das erfindungsgemäße Verfahren zu einer Verbundscheibe laminiert wird.

Eine Schrittfolge zur Entlüftung der Stapelfolge, umfassend die folgenden Verfahrensschritte:
(b1) Anlegen eines Vakuum-Rings oder eines Vakuum-Sacks um die Stapelfolge,
(b2) Entlüften der Stapelfolge
   - bei einer Temperatur T₁ von 0°C bis 30°C, bevorzugt bei Raumtemperatur oder Umgebungstemperatur,
   - für eine Zeitdauer t₁ von größer oder gleich 8 Minuten (abgekürzt: min), bevorzugt für eine Zeitdauer t₁ von 15 min bis 35 min und besonders bevorzugt für eine Zeitdauer t₁ von 20 min bis 30 min und
   - durch Anlegen eines absoluten Drucks p₁ von kleiner oder gleich 0,3 bar, bevorzugt von kleiner oder gleich 0,2 bar und besonders bevorzugt von kleiner oder gleich 0,15 bar an den Vakuum-Ring oder den Vakuum-Sack,
(b3) Erwärmen der Stapelfolge
   - auf eine Temperatur T₂ von 70°C bis 130°C, bevorzugt von 80°C bis 130°C und besonders bevorzugt von 90°C bis 110°C,
   - wobei ein Unterdruck p₂ von kleiner oder gleich 0,3 bar, bevorzugt von kleiner oder gleich 0,2 bar und besonders bevorzugt von kleiner oder gleich 0,15 bar und insbesondere ein Unterdruck von p₂=p₁ am Vakuum-Ring (5) oder am Vakuum-Sack aufrecht gehalten wird,
(b4) Entlüften der Stapelfolge
   - für eine Zeitdauer t₃ von größer oder gleich 8 min, bevorzugt eine Zeitdauer t₃ von 15 min bis 30 min und besonders bevorzugt für eine Zeitdauer t₃ von 20 min bis 30 min,
   - durch Aufrechthalten eines absoluten Drucks p₃ von kleiner oder gleich 0,3 bar, bevorzugt von kleiner oder gleich 0,2 bar und besonders bevorzugt von kleiner oder gleich 0,15 bar an den Vakuum-Ring oder den Vakuum-Sack,
   - wobei die Stapelfolge durch Mikrowellenstrahlung auf einer Temperatur T₃ von 70°C bis 130°C, bevorzugt von 80°C bis 130°C und besonders bevorzugt von 90°C bis 110°C gehalten wird,
(b5) Abkühlen der Stapelfolge
   - auf eine Temperatur T₄ von kleiner 70°C,
   - wobei ein absoluter Druck p₄ von kleiner oder gleich 0,3 bar, bevorzugt von kleiner oder gleich 0,2 bar und besonders bevorzugt von kleiner oder gleich 0,15 bar an dem Vakuum-Ring oder dem Vakuum-Sack aufrecht gehalten wird,
(b6) Belüften des Vakuum-Rings oder des Vakuum-Sacks und
(c) Entfernen des Vakuum-Rings oder des Vakuum-Sacks.

Die Erwärmung der Stapelfolge auf eine Temperatur Tᵢ mit i=1,2,3,4 bedeutet im Folgenden, dass zumindest die Zwischenschicht und die an die Zwischenschicht angrenzenden Oberflächen der Substratscheibe und der Deckscheibe die Temperatur Tᵢ aufweisen.

Bei dem erfindungsgemäße Verfahren wird in den Schritten b3) und b4) die Stapelfolge vorteilhafterweise durch Mikrowellenstrahlung in einem Mikrowellenbereich eines Mikrowellenofens erwärmt beziehungsweise auf Temperatur gehalten. Die Mikrowellenstrahlung weist vorteilhafterweise eine Frequenz f von 800 MHz bis 3,0 GHz auf, wobei die Mikrowellenstrahlung gepulst, moduliert oder kontinuierlich sein kann. Eine derartige Mikrowellenstrahlung ist besonders geeignet, eine für die Herstellung einer Verbundscheibe geeignete Zwischenschicht und insbesondere eine Zwischenschicht aus Polyvinylbutyral zu erwärmen. Besonders vorteilhaft ist eine Mikrowellenstrahlung mit einer Frequenz f von 915 MHz oder 2,45 GHz, da Mikrowellenstrahlung mit diesen Frequenzen besonders dazu geeignet ist, Wasser und Wassermoleküle, die in der Zwischenschicht eingelagert sind, in Schwingung zu versetzen und dadurch zu erwärmen.

In einer vorteilhaften Weiterbildung des erfindungsgemäßen Verfahrens wird der Unterdruck während und zwischen der Verfahrensschritte b2) bis b5) aufrecht gehalten. In einer vorteilhaften Weiterbildung des erfindungsgemäßen Verfahrens ist der Unterdruck p₁ bis p₄, der in den Verfahrensschritten b2) bis b5) angelegt wird konstant, d.h. p₁=p₂=p₃=p₄ oder annähernd konstant, d.h. der Unterdruck schwankt maximal um 30% und bevorzugt maximal um 10%.

In einer vorteilhaften Ausführungsform des erfindungsgemäßen Verfahrens wird im Verfahrensschritt b3) die Stapelfolge innerhalb einer Zeitdauer t₂ von 0,5 min bis 10 min und bevorzugt von 1 min bis 5 min erwärmt. Bei dem erfindungsgemäßen Verfahren sind derart kurze Erwärmungszeiten möglich, da die Zwischenschicht direkt durch die Mikrowellenstrahlung erwärmt wird.

In einer vorteilhaften Ausführungsform des erfindungsgemäßen Verfahrens ist die Endtemperatur T₂ im Verfahrensschritt b3) gleich der Temperatur T₃ in Verfahrensschritt b4) oder annähernd konstant, d.h. die Temperaturen weichen maximal um 30% und bevorzugt maximal um 10 % voneinander ab.

Als Substratscheibe und Deckscheibe sind im Grunde alle elektrisch isolierenden Substrate geeignet, die unter den Bedingungen der Herstellung und der Verwendung der erfindungsgemäßen Verbundscheibe thermisch und chemisch stabil sowie dimensionsstabil sind.

Die Substratscheibe und/oder die Deckscheibe enthalten bevorzugt Glas, besonders bevorzugt Flachglas, noch mehr bevorzugt Floatglas und insbesondere Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Das Substrat und/oder die Deckscheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehr-relevanten Sichtfeld des Fahrers liegen, beispielsweise für Dachscheiben, kann die Transmission aber auch viel geringer sein, beispielsweise größer als 5 %.

Die Dicke von Substrat und/oder Deckscheibe kann breit variieren und so hervorragend den Erfordernissen des Einzelfalls angepasst werden. Vorzugsweise werden Standardstärken von 0,5 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Das Substrat und gegebenenfalls die Deckscheibe weisen beispielsweise im Fahrzeugbau und Architekturbereich übliche Flächen von 200 cm² bis zu 20 m² auf.

Die Verbundscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate und die Deckscheiben planar oder leicht oder stark in einer Richtung oder in mehreren Richtungen des Raumes gebogen. Insbesondere werden planare Substrate und Deckscheiben verwendet. Die Scheiben können farblos oder gefärbt sein.

Substrate und/oder Deckscheiben werden durch mindestens eine Zwischenschicht miteinander verbunden. Die Zwischenschicht ist bevorzugt transparent. Die Zwischenschicht enthält vorzugsweise mindestens einen Kunststoff, bevorzugt Polyvinylbutyral (PVB), Ethylenvinylacetat (EVA) und / oder Polyethylenterephthalat (PET). Die Zwischenschicht kann aber auch beispielsweise Polyurethan (PU), Polypropylen (PP), Polyacrylat, Polyethylen (PE), Polycarbonat (PC), Polymethylmethacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten.

Die Zwischenschicht kann durch eine oder auch durch mehrere übereinander angeordnete Folien ausgebildet werden, wobei die Dicke einer Folie bevorzugt von 0,025 mm bis 1 mm beträgt, typischerweise 0,38 mm oder 0,76 mm. Das heißt die Zwischenschicht kann jeweils aus einer oder aus mehreren Folien aufgebaut sein. Bevorzugt sind dabei mindestens drei übereinander angeordnete Folien, insbesondere Polvyinybutyral-Folien, mit alternierender unterschiedlicher Plastizität oder Elastizität, wie sie beispielsweise aus der EP 0763420 A1 oder der EP 0844075 A1 bekannt sind.

Die Zwischenschichten können bevorzugt thermoplastisch sein und nach der Lamination das Substrat, die Deckscheibe und eventuelle weitere Zwischenschichten miteinander verkleben.

Das erfindungsgemäße Verfahren ist besonders geeignet Zwischenschichten aus einer oder mehreren Polyvinylbutyral-Folien zu verarbeiten. Die Oberfläche der Polyvinylbutyral-Folie kann dabei geprägt sein und eine beliebige Rauigkeit aufweisen. Besonders bevorzugt sind Polyvinylbutyral-Folien mit einer Rauigkeit R_{z} von 15 µm bis 90 µm. R_{z} ist hier definiert als die gemittelte Rautiefe, also der Summe aus der Höhe der größten Profilspitze und der Tiefe des größten Profiltals innerhalb einer Einzelmessstrecke Iᵣ.

In einer vorteilhaften Weiterbildung des erfindungsgemäßen Verfahrens weist die Zwischenschicht und insbesondere die Polyvinylbutyral-Folie einen Wasseranteil von mehr als 0,10%, bevorzugt von 0,15% bis 0,60% und insbesondere von 0,20% bis 0,55% auf. Mit derartigen Wasseranteilen lässt sich eine schnelle und effektive Erwärmung der Stapelfolge im erfindungsgemäßen Mikrowellenbereich erzielen und die Haftungs- sowie Entlüftungseigenschaften der Zwischenschicht bleiben erhalten.

Die Substratscheibe, die Deckscheibe und/oder die Zwischenschicht können eine elektrisch leitfähige Beschichtung und insbesondere eine transparente elektrisch leitfähige Beschichtung aufweisen.

Erfindungsgemäße elektrisch leitfähige Schichten sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schicht können aber auch mehrere Einzelschichten umfassen, beispielsweise Einzelschichten eines einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie Vakuumverdampfung oder PVD(physical vapour deposition) -Verfahren wie die magnetfeldgestützte Kathodenzerstäubung oder CVD(chemical vapour deposition)-Verfahren durchgeführt werden.

Weitere geeignete elektrisch leitfähige Schichten enthalten bevorzugt Indium-Zinnoxid (ITO), fluordotiertes Zinnoxid (SnO₂:F) oder aluminiumdotiertes Zinkoxid (ZnO:Al) oder bestehen daraus.

Die elektrisch leitfähige Schicht kann prinzipiell jede Beschichtung sein, die elektrisch kontaktiert werden kann. Soll die erfindungsgemäße Verbundscheibe die Durchsicht ermöglichen, wie es beispielsweise bei Scheiben im Fensterbereich der Fall ist, so ist die elektrisch leitfähige Schicht bevorzugt transparent. In einer vorteilhaften Ausgestaltung ist die elektrisch leitfähige Schicht eine Schicht oder ein Schichtaufbau mehrerer Einzelschichten mit einer Gesamtdicke von kleiner oder gleich 2 µm, besonders bevorzugt kleiner oder gleich 1 µm.

Um Kurzschlüsse und Funkenüberschläge im Bereich der Mikrowellenbestrahlung zu verhindern, ist es vorteilhaft, wenn die erfindungsgemäße transparente elektrisch leitfähige Schicht einen Flächenwiderstand von 0,4 Ohm/Quadrat bis 200 Ohm/Quadrat aufweist. In einer besonders bevorzugten Ausgestaltung weist die erfindungsgemäße elektrisch leitfähige Schicht einen Flächenwiderstand von 0,5 Ohm/Quadrat bis 20 Ohm/Quadrat auf.

Die elektrisch leitfähige Schicht enthält bevorzugt eine transparente, elektrisch leitfähige Beschichtung. Transparent bedeutet hier durchlässig für elektromagnetische Strahlung einer Wellenlänge von 300 nm bis 1.300 nm und insbesondere für sichtbares Licht.

In einer vorteilhaften Ausführungsform des erfindungsgemäßen Verfahrens wird die Lamination der Verbundscheibe vollständig autoklavfrei durchgeführt. Das heißt es folgt kein weiterer Verfahrensschritt, der ein Autoklavverfahren verwendet. Wie Untersuchungen der Erfinder zeigten, konnte bereits mit autoklavfreien Verfahren ein ausgezeichnetes Ergebnis hinsichtlich Transparenz, Klarheit und Festigkeit der Verbundscheibe erzielt werden. Autoklavverfahren sind besonders energieintensiv, da die komplette Stapelfolge über lange Zeit unter Überdruck bei hohen Temperaturen gehalten werden muss. Bei dem hier vorgestellten autoklavfreien Verfahren wird durch die gezielte Einwirkung der Mikrowellenstrahlung nur die Stapelfolge und insbesondere nur die Zwischenschicht mit den angrenzenden Oberflächen des Substrats und der Deckscheibe erwärmt, was besonders energiesparend ist.

Es versteht sich, dass alternativ zum autoklavfreien Verfahren, durch die Verfahrensschritte a) bis c) zunächst ein Vorverbund hergestellt werden kann, an den sich eine Autoklavverfahren anschließt.

Ein weiterer Aspekt der Erfindung umfasst eine Vorrichtung zur Durchführung des Verfahrens, mindestens umfassend:
- eine Transporteinrichtung zum Verfahren der Stapelfolge durch die Vorrichtung entlang einer Transportrichtung,
- ein Vakuumsystem mit mindestens einem Vakuum-Ring oder mindestens einem Vakuum-Sack zum Entlüften der Stapelfolge in den Verfahrensschritten b2) bis b5),
- mindestens einen Mikrowellenbereich (12) zum Erwärmen der Stapelfolge (1) in den Verfahrensschritten b3) und b4).

Der Mikrowellenbereich wird üblicherweise in einem Mikrowellenofen erzeugt. Es versteht sich, dass die erfindungsgemäße Vorrichtung mehrere Mikrowellenöfen aufweisen kann, die in Transportrichtung hintereinander angeordnet sind. Alternativ oder in Kombination können der oder die Mikrowellenöfen einen oder mehrere Mikrowellenbereiche aufweisen.

Das erfindungsgemäße Verfahren kann in der erfindungsgemäßen Vorrichtung sequenziell oder im Chargenprozess (auch Batch-Betrieb genannt) durchgeführt werden. Im Batch-Betrieb werden bei der Durchführung des erfindungsgemäßen Verfahrens eine oder mehrere Stapelfolgen gleichzeitig in dem Mikrowellenbereich des Mikrowellenofens angeordnet. Beim sequenziellen Betrieb werden mehrere Stapelfolgen hintereinander durch den Mikrowellenbereich des Mikrowellenofens geführt. Der sequenzielle Betrieb kann kontinuierlich erfolgen, d.h. die Stapelfolge wird in kontinuierlicher Bewegung durch den Mikrowellenbereich geführt und dabei prozessiert. Alternativ dazu kann der sequenzielle Betrieb diskontinuierlich erfolgen, d.h. die Stapelfolge wird in den Mikrowellenbereich verbracht, der Transportmechanismus angehalten, die Stapelfolge erwärmt und dabei entlüftet und anschließend aus dem Mikrowellenbereich herausgefahren.

Eine vorteilhafte Ausgestaltung der erfindungsgemäßen Vorrichtung weist mindestens eine Kühleinheit auf, bevorzugt ein Gebläse mit oder ohne Wärmetauscher. Die Kühleinheit ist in Transportrichtung hinter dem Mikrowellenbereich angeordnet. Dies hat den besonderen Vorteil, dass die Stapelfolge im Verfahrensschritt b5) schnell auf die geforderte Temperatur abgekühlt werden kann, was zu einer Verkürzung der Prozesszeit führt.

In einer vorteilhaften Ausgestaltung der erfindungsgemäßen Vorrichtung sind zumindest die im Mikrowellenbereich angeordneten Abschnitte des Transportsystems und des Vakuumsystems elektrisch isolierend oder sehr hochohmig und bevorzugt metallfrei ausgebildet. Dadurch werden ungewünschte Absorption und Kurzschlüsse sowie Funkenbildung im Mikrowellenbereich vermieden. Geeignet Materialien für das Transportsystem und das Vakuumsystems in den entsprechenden Abschnitten sind daher Kunststoffe, Gummi oder Keramiken.

Die erfindungsgemäße Vorrichtung kann derart ausgestaltet sein, dass die Stapelfolge in Längsrichtung oder querstehend durch die Vorrichtung transportiert wird.

Ein weiterer Aspekt der Erfindung umfasst die Verwendung einer Verbundscheibe, hergestellt mit dem erfindungsgemäßen Verfahren, in einem Fortbewegungsmittel für den Verkehr auf dem Lande, in der Luft oder zu Wasser, insbesondere in Kraftfahrzeugen Zügen, Flugzeugen oder Schiffen, beispielsweise als Windschutzscheibe, Heckscheibe, Seitenscheibe und/oder Dachscheibe, für Gebäude, insbesondere im Zugangsbereich, Fensterbereich, Dachbereich oder Fassadenbereich, als Einbauteil in Möbeln und Geräten.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1: ein Flussdiagramm einer beispielshaften Ausführungsform des erfindungsgemäßen Verfahrens,
- Figur 2: eine schematische Darstellung des erfindungsgemäßen Verfahrens in einer erfindungsgemäßen Vorrichtung,
- Figur 3A: ein Temperaturdiagramm des erfindungsgemäßen Verfahrens,
- Figur 3B: ein Druckdiagramm des erfindungsgemäßen Verfahrens und
- Figur 4: eine perspektivische Darstellung einer alternativen erfindungsgemäßen Vorrichtung.

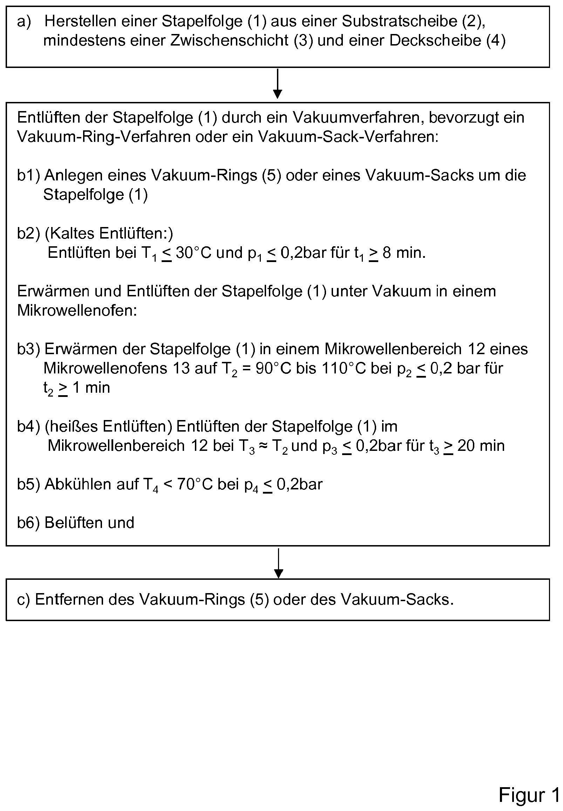

Figur 1 zeigt ein Flussdiagramm einer beispielhaften Ausführungsform des erfindungsgemäßen Verfahrens zur Lamination einer Verbundscheibe.

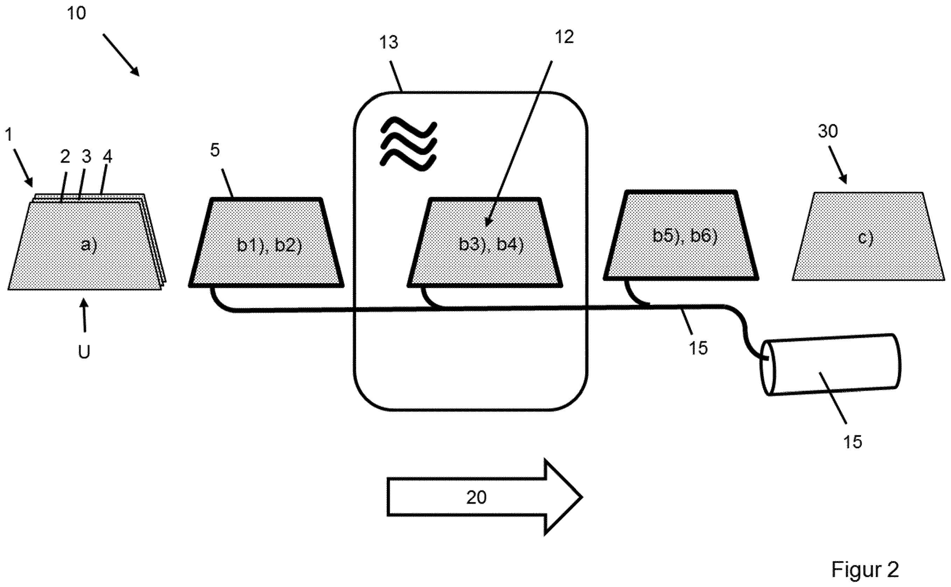

Figur 2 zeigt eine schematische Darstellung des erfindungsgemäßen Verfahrens in einer erfindungsgemäßen Vorrichtung 10.

In einem ersten Schritt a) des erfindungsgemäßen Verfahrens wird eine Stapelfolge 1 aus beispielsweise einer Substratscheibe 2, einer Zwischenschicht 3 und einer Deckscheibe 4 hergestellt. Die aus der Stapelfolge 1 durch Lamination herzustellende Verbundscheibe 30 ist hier beispielsweise eine Windschutzscheibe eines Personenkraftwagens. Es versteht sich, dass das erfindungsgemäße Verfahren und die erfindungsgemäße Vorrichtung für eine Vielzahl von Verbundscheiben im Fahrzeug-, Architektur- oder Dekorbereich verwendet werden kann.

Die Substratscheibe 2 und die Deckscheibe 4 sind in diesem Beispiel jeweils annähernd trapezförmig und weisen eine leichte Wölbung auf, wie sie für moderne Windschutzscheiben üblich ist. Die Substratscheibe 2 und die Deckscheibe 4 sind in diesem Beispiel gleich groß und deckungsgleich übereinander angeordnet. Die Substratscheibe 2 und die Deckscheibe 4 haben eine Breite von beispielsweise 0,9 m und eine Länge an der Unterkante U, das heißt an der längeren Grundseite der trapezförmigen Scheiben, von beispielsweise 1,5 m. Die der Unterkante U gegenüberliegende Kante hat eine Länge von beispielsweise 1,2 m. Es versteht sich, dass bei der Lamination von Verbundscheiben von beispielsweise Seitenscheiben oder Dachscheiben, kleinere oder größere, sowie dreiecksförmig mit komplexen Ausbuchtungen oder rechteckförmige Substratscheiben 2 und Deckscheiben 4 verwendet werden können.

Die Substratscheibe 2 ist beispielsweise dafür vorgesehen, in Einbaulage dem Innenraum des Fahrzeugs zugewandt zu sein, wogegen die Deckscheibe 4 dafür vorgesehen ist bezüglich des Fahrzeuginnenraums nach außen weist. Substratscheibe 2 und Deckscheibe 4 bestehen beispielsweise aus Natron-Kalkglas. Die Dicke der Substratscheibe 2 beträgt beispielsweise 1,6 mm und die Dicke der Deckscheibe 4 beträgt 2,1 mm. Es versteht sich, dass Substratscheibe 2 und Deckscheibe 4 beispielsweise auch gleich dick ausgebildet sein können. Die Zwischenschicht 3 ist eine thermoplastische Zwischenschicht und besteht beispielsweise aus Polyvinylbutyral (PVB). Sie weist beispielsweise eine Dicke von 0,76 mm bis 0,86 mm auf. Die Zwischenschicht 3 hat in diesem Beispiel einen Wassergehalt von beispielsweise 0,40%.

In einem Schritt b1) des erfindungsgemäßen Verfahrens wird ein Vakuum-Ring 5 um die äußeren Seitenkanten der Stapelfolge 1 gelegt. Der Vakuum-Ring 5 ("greensnake") besteht aus einem unterdruckstabilen Schlauch, der die Form eines geschlossenen Rings hat und an seiner Innenseite einen Schlitz aufweist, in den die äußere Seitenkante der Stapelfolge 1 eingelegt ist. Der Vakuum-Ring 5 umschließt die Seitenkanten und den Zwischenraum zwischen der Substratscheibe 2 und der Deckscheibe 4 vollständig und dichtet ihn vakuumtechnisch ab. Der Vakuum-Ring 5 ist über einen Unterdruckschlauch mit einem optionalen Vakuum-Kompensationstank und einer Vakuum-Pumpe verbunden. Vakuum-Ring 5, Unterdruckschlauch, gegebenenfalls Vakuum-Kompensationstank und Vakuum-Pumpe bilden ein Vakuumsystem 15. Der Vakuum-Kompensationstank hat beispielsweise ein Volumen von 1 m³. Die Vakuum-Pumpe hat beispielsweise eine Förderkapazität von 300 m³/h und erreicht einen maximalen Enddruck von 0,1 mbar.

In der Figur 2 ist unter b1) eine Stapelfolge 1 aus einer Substratscheibe 2, einer Zwischenschicht 3 und einer Deckschicht 4 mit einem montierten Vakuum-Ring 5 dargestellt. Die Stapelfolge ist in aufrechter Position und längs zur Transportrichtung 20 angeordnet. Die Stapelfolge 1 ist in eine hier nicht dargestellte Transportvorrichtung eingesetzt, die die Stapelfolge 1 durch die Vorrichtung 10 entlang der Transportrichtung 20 transportiert. Die Transportvorrichtung ist beispielsweise ein Förderband mit geeigneten Haltern zur Aufnahme der Stapelfolge 1. Der Vakuum-Ring 5 und der Unterdruckschlauch, der den Vakuum-Ring 5 mit der Vakuum-Pumpe verbindet sind beweglich ausgebildet, so dass sie mit der Stapelfolge 1 unter Aufrechterhaltung des Unterdrucks durch die Vorrichtung 10 transportiert werden können.

In einem weiteren Schritt b2) wird die Stapelfolge 1 durch Anlegen eines Unterdrucks von beispielsweise p = 0,1 bar entlüftet. Die Druckangaben beziehen sich auf den absoluten Druck, also den Druck gegenüber dem absoluten Vakuum mit p = 0 bar. Die Entlüftung in diesem Verfahrensschritt erfolgt bei einer Temperatur T₁ der Stapelfolge 1 zwischen 0°C und 30°C und beispielsweise der Raumtemperatur (RT) der Umgebung. Dies erfolgt über einen Zeitraum t₁ von größer oder gleich 8 min und beispielsweise von 25 min.

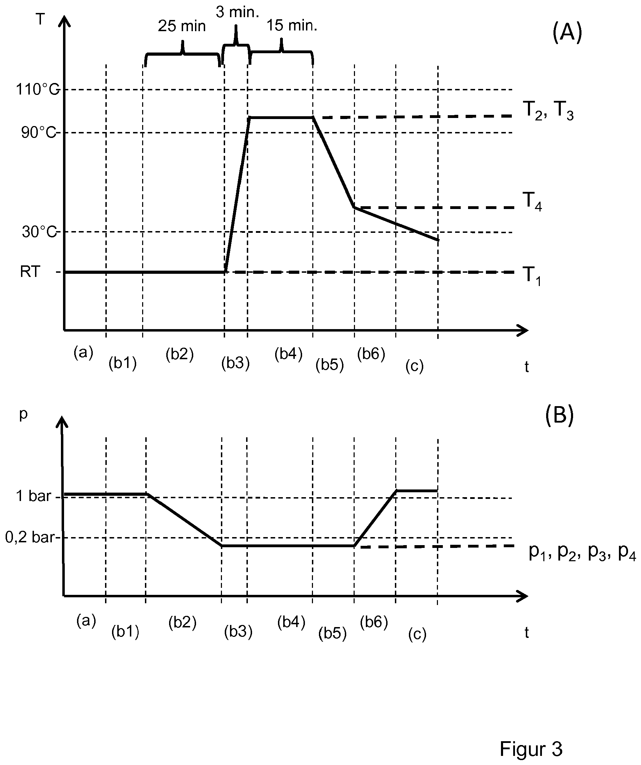

Figur 3A zeigt ein beispielhaftes Diagramm des Temperaturverlaufs während des erfindungsgemäßen Verfahrens. Die horizontale Achse ist in Verfahrensschritten unterteilt. Beide Achsen sind nicht maßstabsgetreu.

Figur 3B zeigt ein beispielhaftes Diagramm des Druckverlaufs während des erfindungsgemäßen Verfahrens. Die horizontale Achse ist in Verfahrensschritten unterteilt. Beide Achsen sind nicht maßstabsgetreu.

Anschließend wird in einem Schritt b3) die Stapelfolge 1 durch die Transportvorrichtung in den Mikrowellen 12 der Vorrichtung 10 transportiert und dort erwärmt. Der Mikrowellenbereich 12 wird im Innern eines Mikrowellenofens 13 erzeugt, der eine Mikrowellenstrahlung mit beispielsweise 2,45 GHz ausstrahlt. Dort wird die Stapelfolge 1 auf eine Temperatur T₂ von 70°C bis 130°C und beispielsweise auf 95°C innerhalb einer Zeitdauer t₂ von beispielsweise 3 min erwärmt. Der Unterdruck von p₂ = 0,1 bar am Vakuum-Ring wird dabei kontinuierlich aufrechterhalten. Es versteht sich, dass der Unterdruck auch nur periodisch angelegt sein kann. Dies ist insbesondere bei Verwendung eines Vakuum-Sack-Verfahrens der Fall, bei dem der Vakuum-Sack bei Transport zwischen mehreren Positionen vom Vakuum-System abgekoppelt wird.

Anschließend wird in einem Schritt b4) die Stapelfolge 1 bei der Temperatur T₃ von beispielsweise 95°C über einen Zeitraum t₃ von größer oder gleich 8 min und beispielsweise von 15 min entlüftet. Der Unterdruck von p₃ = 0,1 bar am Vakuum-Ring wird dabei kontinuierlich aufrechterhalten.

Anschließend wird in einem Schritt b5) die Stapelfolge 1 auf eine Temperatur T₄ von kleiner 70°C abgekühlt, beispielsweise auf eine Temperatur T₄ von 50°C. Der Unterdruck von p₄ = 0,1 bar am Vakuum-Ring wird dabei kontinuierlich aufrechterhalten. Die Abkühlung kann beispielsweise durch eine hier nicht dargestellte Kühleinheit, beispielsweise durch einen Luftstrom von Luft aus der Umgebung der Vorrichtung 10 mit einem Gebläse beschleunigt werden. Das Abkühlen unter Unterdruck ist vorteilhaft, da ein Abkühlen ohne Unterdruck zu einer Bildung von Blasen und Trübungen in der späteren Verbundscheibe führt.

Anschließend wird in einem Schritt b6) die Saugwirkung am Vakuum-Ring 5 der Stapelfolge 1 abgeschaltet und ein Umgebungsdruck angelegt, wodurch der Vakuum-Ring 5 belüftet wird.

Anschließend wird in einem Schritt c) der Vakuum-Ring 5 von der Stapelfolge 1 entfernt.
Die Stapelfolge 1 kühlt während der Schritte b6) und c) weiter ab, bis sie schließlich die Raumtemperatur RT erreicht.

Wie Untersuchungen der Erfinder ergaben, konnten mit den hier beispielhaft dargestellten Verfahren Verbundscheiben 30 mit ausgezeichneter Qualität hinsichtlich Transparenz, Trübung bzw. Klarheit und Festigkeit autoklavfrei hergestellt werden. Das erfindungsgemäße Verfahren ist somit besonders energiesparend und durch eine kurze Prozesszeit sehr kostengünstig. Es versteht sich, dass alternativ und zur Erzielung besonderer Eigenschaften auch weitere Verfahrensschritte wie ein Autoklavverfahren oder ein Kalanderverfahren folgen können.

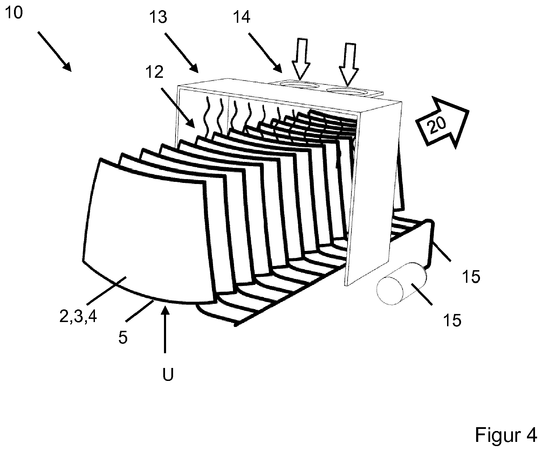

Figur 4 zeigt eine perspektivische Darstellung einer alternativen erfindungsgemäßen Vorrichtung 10 zur Durchführung des erfindungsgemäßen Verfahrens. Mit der hier dargestellten Vorrichtung 10 lassen sich Verbundscheiben 30 mit den entsprechenden Prozessschritten der Figur 1, sowie den Figuren 3A und 3B herstellen, so dass im Folgenden nur auf die Unterschiede der Vorrichtungen 10 zwischen Figur 2 und Figur 4 eingegangen wird.

In der Figur 4 sind eine Vielzahl von Stapelfolgen 1 aus jeweils einer Substratscheibe 2, einer Zwischenschicht 3 und einer Deckschicht 4 mit jeweils einem montierten Vakuum-Ring 5 dargestellt. Die Stapelfolgen 1 sind in aufrechter Position und parallel zu einander angeordnet. Die Stapelfolgen 1 sind in eine nicht dargestellte Transportvorrichtung eingesetzt, die die Stapelfolgen 1 durch die Vorrichtung entlang der Transportrichtung 20 transportiert. Dabei werden die Stapelfolgen 1 quer zur Transportrichtung orientiert. Die Transportvorrichtung ist beispielsweise ein Förderband mit geeigneten Haltern zur Aufnahme der Stapelfolgen 1. Der Vakuum-Ring 5 und der Unterdruckschlauch, der den Vakuum-Ring 5 mit der Vakuum-Pumpe verbindet sind beweglich ausgebildet, so dass sie mit der Stapelfolge 1 unter Aufrechterhaltung des Unterdrucks durch die Vorrichtung 10 transportiert werden können.

Des Weiteren ist eine Kühleinheit 14 dargestellt, die hinter dem Mikrowellenofen 13 angeordnet ist. Die Abkühlung der Stapelfolge 1 nach Durchlaufen des Mikrowellenbereichs 12 kann hier beispielsweise durch einen Luftstrom von Luft aus der Umgebung der Vorrichtung 10 mit einem Gebläse beschleunigt werden.

### Bezugszeichenliste:

- 1: Stapelfolge
- 2: Substratscheibe
- 3: Zwischenschicht
- 4: Deckscheibe
- 5: Vakuum-Ring
- 10: Vorrichtung
- 12: Mikrowellenbereich
- 13: Mikrowellenofen
- 14: Kühleinheit
- 15: Vakuumsystem
- 20: Transportrichtung
- 30: Verbundscheibe
- p₁, p₂, p₃, p₄: Unterdruck
- t₁, t₂, t₃, t₄: Zeitdauer
- T₁, T₂, T₃, T₄: Temperatur
- U: Unterkante

## Patentansprüche

1. Verfahren zur Lamination einer Verbundscheibe (30), wobei zumindest
(a) eine Stapelfolge (1) aus einer Substratscheibe (2), mindestens einer Zwischenschicht (3) und einer Deckscheibe (4) hergestellt wird,
(b1) ein Vakuum-Ring (5) oder ein Vakuum-Sack um die Stapelfolge (1) gelegt wird,
(b2) die Stapelfolge (1) für eine Zeitdauer t₁ von größer oder gleich 8 min und bei einer Temperatur T₁ von 0°C bis 30°C durch Anlegen eines Unterdrucks p₁ von kleiner oder gleich 0,3 bar an den Vakuum-Ring (5) oder den Vakuum-Sack entlüftet wird,
(b3) die Stapelfolge (1) durch Mikrowellenstrahlung auf eine Temperatur T₂ von 70°C bis 130°C erwärmt wird, wobei ein Unterdruck p₂ von kleiner oder gleich 0,3 bar am Vakuum-Ring (5) oder am Vakuum-Sack aufrecht gehalten wird,
(b4) die Stapelfolge (1) durch Mikrowellenstrahlung auf einer Temperatur T₃ von 70°C bis 130°C gehalten und für eine Zeitdauer t₃ von größer oder gleich 8 min bei einem Unterdruck p₃ von kleiner oder gleich 0,3 bar am Vakuum-Ring (5) oder am Vakuum-Sack entlüftet wird,
(b5) die Stapelfolge (1) auf eine Temperatur T₄ von kleiner 70°C abgekühlt wird, wobei ein Unterdrucks p₄ von kleiner oder gleich 0,3 bar am Vakuum-Ring (5) oder am Vakuum-Sack aufrecht gehalten wird,
(b6) der Vakuum-Ring (5) oder der Vakuum-Sack belüftet wird und
(c) der Vakuum-Ring (5) oder der Vakuum-Sack entfernt wird.

2. Verfahren nach Anspruch 1, wobei in Schritt b3) die Mikrowellenstrahlung mit einer Frequenz f von 800 MHz bis 3,0 GHz und bevorzugt von 915 MHz oder 2,45 GHz ausgestrahlt wird.

3. Verfahren nach Anspruch 1 oder Anspruch 2, wobei in Schritt b2) die Stapelfolge (1) für eine Zeitdauer t₁ von 15 min bis 35 min und bevorzugt von 20 min bis 30 min entlüftet wird.

4. Verfahren nach einem der Ansprüche 1 bis 3, wobei in Schritt b3) die Stapelfolge (1) innerhalb einer Zeitdauer t₂ von 0,5 min bis 10 min und bevorzugt von 1 min bis 5 min erwärmt wird.

5. Verfahren nach einem der Ansprüche 1 bis 4, wobei in Schritt b4) die Stapelfolge (1) für eine Zeitdauer t₃ von 15 min bis 35 min und bevorzugt von 20 min bis 30 min entlüftet wird.

6. Verfahren nach einem der Ansprüche 1 bis 5, wobei in Schritt b3) die Stapelfolge (1) auf eine Temperatur T₂ von 80°C bis 130°C und bevorzugt von 90°C bis 110°C erwärmt wird und/oder in Schritt b4) die Stapelfolge (1) auf einer Temperatur T₃ von 80°C bis 130°C und bevorzugt von 90°C bis 110°C gehalten wird.

7. Verfahren nach einem der Ansprüche 1 bis 6, wobei als Zwischenschicht (3) mindestens eine Folie aus Polyvinybutyral (PVB), bevorzugt mindestens drei übereinander angeordnete Folien aus Polvyinybutyral mit alternierender unterschiedlicher Plastizität oder Elastizität, verwendet wird und/oder als Zwischenschicht (3) eine Folie mit einem Wasseranteil von mehr als 0,10%, bevorzugt von 0,15% bis 0,60% und insbesondere von 0,20% bis 0,55% verwendet wird.

8. Verfahren nach einem der Ansprüche 1 bis 7, wobei für die Substratscheibe (2) und/oder die Deckscheibe (4) Glas, bevorzugt Flachglas, besonders bevorzugt Floatglas und insbesondere Kalk-Natron-Glas, Quarzglas oder Borosilikatglas, oder Polymere, bevorzugt Polyethylen, Polypropylen, Polycarbonat, Polymethylmethacrylat und/oder Gemische davon verwendet werden.

9. Verfahren nach einem der Ansprüche 1 bis 8, wobei das gesamte Verfahren zur Lamination der Verbundscheibe (30) autoklavfrei durchgeführt wird.

10. Verfahren nach einem der Ansprüche 1 bis 8,
a) ein Vorverbund durch die Verfahrensschritte (a) bis (c) laminiert wird, und
b) der Vorverbund in einem Autoklavverfahren behandelt wird.

11. Vorrichtung (10) zur Durchführung des Verfahrens nach einem der Ansprüche 1 bis 10, mindestens umfassend:
- eine Transporteinrichtung zum Verfahren einer Stapelfolge (1) durch die Vorrichtung (10) entlang einer Transportrichtung (20),
- ein Vakuumsystem (15) mit mindestens einem Vakuum-Ring (5) oder mindestens einem Vakuum-Sack zum Entlüften der Stapelfolge (1) in den Verfahrensschritten b2), b3), b4) und b5),
- mindestens einen Mikrowellenbereich (12) zum Erwärmen der Stapelfolge (1) in den Verfahrensschritten b3) und b4).

12. Vorrichtung (10) nach Anspruch 11, wobei eine Kühleinheit (14), bevorzugt ein Gebläse, in Transportrichtung (20) nach dem Mikrowellenbereich (12) angeordnet ist, zum Abkühlen der Stapelfolge (1) im Verfahrensschritt b5).

13. Vorrichtung (10) nach Anspruch 11 oder Anspruch 12, wobei die im Mikrowellenbereich angeordneten Abschnitte des Transportsystems und des Vakuumsystems (15) metallfrei und/oder elektrisch isolierend ausgebildet sind.

14. Vorrichtung (10) nach einem der Ansprüche 11 bis 13, wobei ein Infrarotthermometer zur Messung der Temperatur T der Stapelfolge (1) im Mikrowellenbereich (12).

15. Verwendung einer mit dem Verfahren nach einem der Ansprüche 1 bis 10 hergestellten Verbundscheibe in einem Fortbewegungsmittel für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden.

## Claims

1. Method for laminating a composite pane (30), wherein at least
(a) a stack sequence (1) of a substrate pane (2), at least one intermediate layer (3), and a cover layer (4) is produced,
(b1) a vacuum ring (5) or a vacuum bag is placed around the stack sequence (1),
(b2) the stack sequence (1) is deaerated for a period t₁ greater than or equal to 8 min and at a temperature T₁ of 0 °C to 30 °C by applying a negative pressure p₁ less than or equal to 0.3 bar to the vacuum ring (5) or to the vacuum bag,
(b3) the stack sequence (1) is heated by microwave radiation to a temperature T₂ of 70 °C to 130 °C, wherein a negative pressure p₂ less than or equal to 0.3 bar is maintained on the vacuum ring (5) or on the vacuum bag,
(b4) the stack sequence (1) is kept by microwave radiation at a temperature T₃ of 70 °C to 130 °C and is deaerated for a period t₃ greater than or equal to 8 min at a negative pressure p₃ less than or equal to 0.3 bar on the vacuum ring (5) or on the vacuum bag,
(b5) the stack sequence (1) is cooled to a temperature T₄ of less than 70 °C, wherein a negative pressure p₄ less than or equal to 0.3 bar is maintained on the vacuum ring (5) or on the vacuum bag,
(b6) the vacuum ring (5) or the vacuum bag is aerated, and
(c) the vacuum ring (5) or the vacuum bag is removed.

2. Method according to claim 1, wherein in step b3), the microwave radiation is emitted with a frequency f of 800 MHz to 3.0 GHz and preferably of 915 MHz or 2.45 GHz.

3. Method according to claim 1 or claim 2, wherein in step b2), the stack sequence (1) is deaerated for a period t₁ of 15 min to 35 min and preferably of 20 min to 30 min.

4. Method according to one of claims 1 through 3, wherein in step b3), the stack sequence (1) is heated within a period t₂ of 0.5 min to 10 min and preferably of 1 min to 5 min.

5. Method according to one of claims 1 through 4, wherein in step b4), the stack sequence (1) is deaerated for a period t₃ of 15 min to 35 min and preferably of 20 min to 30 min.

6. Method according to one of claims 1 through 5, wherein in step b3), the stack sequence (1) is heated to a temperature T₂ of 80 °C to 130 °C and preferably of 90 °C to 110 °C; and/or in step b4), the stack sequence (1) is kept at a temperature T₃ of 80 °C to 130 °C and preferably of 90 °C to 110 °C.

7. Method according to one of claims 1 through 6, wherein as the intermediate layer (3), at least one film made of polyvinyl butyral (PVB), preferably at least three films arranged one atop another made of polyvinyl butyral with alternating different plasticity or elasticity, is used; and/or as the intermediate layer (3), a film with a water content of more than 0.10%, preferably of 0.15% to 0.60%, and in particular of 0.20% to 0.55% is used.

8. Method according to one of claims 1 through 7, wherein for the substrate pane (2) and/or for the cover pane (4) glass, preferably flat glass, particularly preferably float glass, and in particular soda lime glass, quartz glass, or borosilicate glass, or polymers, preferably polyethylene, polypropylene, polycarbonate, polymethyl methacrylate, and/or mixtures thereof are used.

9. Method according to one of claims 1 through 8, wherein the entire method for laminating the composite pane (30) is carried out autoclave-free.

10. Method according to one of claims 1 through 8,
a) a pre-composite is laminated by steps (a) through (c), and
b) the pre-composite is treated in an autoclave process.

11. Device (10) for carrying out the method according to one of claims 1 through 10, at least comprising:
- a transport apparatus for moving a stack sequence (1) through the device (10) along a transport direction (20),
- a vacuum system (15) with at least one vacuum ring (5) or at least one vacuum bag for deaerating the stack sequence (1) in the steps b2), b3), b4), and b5),
- at least one microwave area (12) for heating the stack sequence (1) in the steps b3) and b4).

12. Device (10) according to claim 11, wherein a cooling unit (14), preferably a fan, is arranged in the transport direction (20) downstream from the microwave area (12), for cooling the stack sequence (1) in the step b5).

13. Device (10) according to claim 11 or claim 12, wherein the sections of the transport system and of the vacuum system (15) arranged in the microwave area are metal-free and/or electrically insulating.

14. Device (10) according to one of claims 11 through 13, wherein an infrared thermometer for measuring the temperature T of the stack sequence (1) in the microwave area (12).

15. Use of a composite pane produced with the method according to one of claims 1 through 10 in a means of transport for travel on land, in the air, or on water, in particular in motor vehicles, for example, as a windshield, a rear window, side windows, and/or a roof panel as well as as a functional single piece, and as a built-in component in furniture, appliances, and buildings.

## Revendications

1. Procédé de stratification d'une plaque composite (30), dans lequel au moins
(a) une séquence d'empilement (1) constituée d'une plaque de substrat (2), d'au moins une couche intermédiaire (3) et d'une plaque de recouvrement (4) est réalisée ;
(b1) un anneau de mise sous vide (5) ou un sac de mise sous vide est placé autour de la séquence d'empilement (1) ;
(b2) l'air de la séquence d'empilement (1) est éliminé pendant une durée t₁ supérieure ou égale à 8 min. et à une température T₁ de 0 °C à 30 °C par application d'une dépression p₁ inférieure ou égale à 0,3 bar à l'anneau de mise sous vide (5) ou au sac de mise sous vide ;
(b3) la séquence d'empilement (1) est chauffée par rayonnement micro-ondes à une température T₂ de 70 °C à 130 °C, une dépression p₂ inférieure ou égale à 0,3 bar étant maintenue sur l'anneau de mise sous vide (5) ou sur le sac de mise sous vide ;
(b4) la séquence d'empilement (1) est maintenue par rayonnement micro-ondes à une température T₃ de 70 °C à 130 °C et, pendant une durée t₃ supérieure ou égale à 8 min., l'air contenu dans la séquence d'empilement (1) est éliminé à une dépression p₃ inférieure ou égale à 0,3 bar appliquée à l'anneau de mise sous vide (5) ou au sac de mise sous vide ;
(b5) la séquence d'empilement (1) est refroidie jusqu'à une température T₄ inférieure à 70 °C, une dépression p₄ inférieure ou égale à 0,3 bar étant maintenue sur l'anneau de mise sous vide (5) ou sur le sac de mise sous vide ;
(b6) l'anneau de mise sous vide (5) ou le sac de mise sous vide est ventilé ; et
(c) l'anneau de mise sous vide (5) ou le sac de mise sous vide est enlevé.

2. Procédé selon la revendication 1, dans lequel, à l'étape b3), le rayonnement micro-ondes est émis à une fréquence f de 800 MHz à 3,0 GHz et, de préférence, de 915 MHz ou 2,45 GHz.

3. Procédé selon la revendication 1 ou la revendication 2, dans lequel, à l'étape b2), l'air contenu dans la séquence d'empilement (1) est éliminé pendant une durée t₁ de 15 min. à 35 min. et, de préférence, de 20 min. à 30 min.

4. Procédé selon l'une des revendications 1 à 3, dans lequel, à l'étape b3), la séquence d'empilement (1) est chauffée pendant une durée t₂ de 0,5 min. à 10 min. et, de préférence, de 1 min. à 5 min.

5. Procédé selon l'une des revendications 1 à 4, dans lequel, à l'étape b4), l'air contenu dans la séquence d'empilement (1) est éliminé pendant une durée t₃ de 15 min. à 35 min. et, de préférence, de 20 min. à 30 min.

6. Procédé selon l'une des revendications 1 à 5, dans lequel, à l'étape b3), la séquence d'empilement (1) est chauffée à une température T₂ de 80 °C à 130 °C et, de préférence, de 90 °C à 110 °C et/ou, à l'étape b4), la séquence d'empilement (1) est maintenue à une température T₃ de 80 °C à 130 °C et, de préférence, de 90 °C à 110 °C.

7. Procédé selon l'une des revendications 1 à 6, dans lequel, comme couche intermédiaire (3), au moins un film de polyvinylbutyral (PVB), de préférence au moins trois films de polyvinylbutyral disposés les uns au-dessus des autres avec des plasticités ou élasticités différentes alternées, est utilisé et/ou, comme couche intermédiaire (3), un film ayant une teneur en eau de plus de 0,10 %, de préférence de 0,15 % à 0,60 % et, en particulier, de 0,20 % à 0,55 % est utilisé.

8. Procédé selon l'une des revendications 1 à 7, dans lequel, pour la plaque de substrat (2) et/ou la plaque de recouvrement (4), du verre, de préférence du verre plat, de manière particulièrement préférée, du verre flotté et en particulier du verre sodocalcique, du verre de quartz ou du verre borosilicaté, ou des polymères, de préférence le polyéthylène, le polypropylène, le polycarbonate, le poly(méthacrylate de méthyle) et/ou des mélanges de ceux-ci sont utilisés.

9. Procédé selon l'une des revendications 1 à 8, dans lequel tout le procédé de stratification de la plaque composite (30) est réalisé sans autoclave.

10. Procédé selon l'une des revendications 1 à 8, dans lequel :
a) un pré-sratifié est obtenu par les étapes de procédé (a) à (c) ; et
b) le pré-stratifié est traité dans un procédé d'autoclavage.

11. Appareil (10) pour la mise en oeuvre du procédé selon l'une des revendications 1 à 10, comportant au moins :
- un dispositif de transport pour amener une séquence d'empilement (1) à traverser l'appareil (10) le long d'une direction de transport (20) ;
- un système à vide (15) ayant au moins un anneau de mise sous vide (5) ou au moins un sac de mise sous vide pour la désaération de la séquence d'empilement (1) dans les étapes de procédé b2), b3), b4) et b5) ;
- au moins une région micro-ondes (12) pour le chauffage de la séquence d'empilement (1) dans les étapes de procédé b3) et b4).

12. Appareil (10) selon la revendication 11, dans lequel une unité de refroidissement (14), de préférence une soufflante, est disposée dans la direction de transport (20) après la région micro-ondes (12), pour le refroidissement de la séquence d'empilement (1) dans l'étape de procédé b5).

13. Appareil (10) selon la revendication 11 ou la revendication 12, dans lequel les sections du système de transport et du système à vide (15) disposées dans la région micro-ondes sont formées sans métal et/ou électriquement isolantes.

14. Appareil (10) selon l'une des revendications 11 à 13, comportant un thermomètre à radiations infrarouges pour la mesure de la température T de la séquence d'empilement (1) dans la région micro-ondes (12).

15. Utilisation d'une plaque composite obtenue par le procédé selon l'une des revendications 1 à 10 dans un moyen de locomotion pour la circulation sur terre, dans l'air ou sur l'eau, en particulier dans des véhicules automobiles, par exemple en tant que pare-brise, lunette arrière, vitres latérales et/ou vitre de toit, ainsi qu'en tant que pièce unique fonctionnelle, et en tant que pièce rapportée dans le mobilier, les appareils et les bâtiments.
